# EUROPEAN PATENT APPLICATION

(11) **EP 3 147 989 A1**
(43) Date of publication of application: **29.03.2017**
(21) Application number: 15796395.0
(22) Date of filing: 19.05.2015
(51) Int. Cl.: H01M 12/06, H01M 2/18, H01M 4/06, H01M 4/46, H01M 4/86

(54) **MAGNESIUM FUEL ELEMENT, MAGNESIUM-AIR BATTERY, AND ELECTRONIC APPARATUS**

(30) Priority: 22.05.2014 JP 2014106567
(71) Applicant: YTS SCIENCE PROPERTIES PTE.LTD., Singapore 079903 (SG); Faris, Sadeg M., Pleasantville, NY 10570 (US)
(72) Inventor: FARIS, Sadeg M., Pleasantiville, New York 10570 (US); YABE, Takashi, Tokyo 114-0013 (JP)
(74) Representative: Gill Jennings & Every LLP
(86) International application number: PCT/JP2015/064334
(87) International publication number: WO 2015/178379

(57) **Abstract**

The magnesium fuel element (100) comprises the magnesium thin plate (101), the separator (102), the electrolyte bag (103) and the electrolyte (104). The separator (102) includes a transparent film, and covers the magnesium thin plate (101). The electrolyte bag (103) is connected to the separator (102), being enclosed with the electrolyte (104). The electrolyte (104) being flowed out from the electrolyte bag (103) is capable of wetting the magnesium thin plate (101) and the separator (102).

## Description

### Technical Field

The present invention relates to a magnesium fuel element, a magnesium air battery, and electronics.

### Background Art

Patent Document 1 discloses a magnesium air battery using magnesium alloy sheet, as an example of a magnesium air battery, which active material is oxygen in the air as a cathode, and magnesium as an anode. The magnesium air battery described in Patent Document 1 consists of magnesium alloy plate attached with anode terminal, and electrolyte retaining sheet, carbon fiber sheet and cathode terminal being rolled in a layer form.

### Prior Art Documents

### Patent Literature

Patent Literature 1: Patent Publication No. 2011-181382

### Summary of Invention

### Technical Problem

The magnesium air battery stated in Reference Document 1 does not account for the actual use, with its cathode and anode being exposed, and replacement of electrolyte and magnesium being exhausted have not been taken into account. Although the realization of an easy-to-handle magnesium air battery, considering the actual use, is expected for putting magnesium air battery into practice, such condition has not been achieved yet.

The present invention has been made in view of such problems, and seeks to enable easy-to-handle magnesium fuel element, a magnesium air battery comprising such magnesium fuel element, and electronics, comprising such magnesium air battery.

### Solution to Problem

In order to meet the above object, magnesium fuel element according to a first aspect of the present invention, comprising:
a magnesium thin plate containing magnesium,
separator covering said magnesium thin plate, including transparent film which transmits ions,
electrolyte bag connected to said separator,
electrolyte enclosed in said electrolyte bag,
said electrolyte, flowed out from said electrolyte bag, is capable of wetting said magnesium thin plate and said separator.

Said separator may include a conductive film.

Said magnesium thin plate may form a zinc thin film on its surface.

Said separator may be arranged, contacting the side surface of said magnesium thin plate, and may comprise a water retention agent which absorbs and retains said electrolyte.

A slit may be formed in said magnesium thin plate.

Magnesium air battery according to a second aspect of the present invention comprising:
magnesium fuel element according to a first aspect of the present invention,
formed from materials with conductivity, a cathode with conductivity that supplies electrons to oxygen, and an anode formed from materials with conductivity,
said electrolyte flows out from said electrolyte bag with it being compressed, and wets said magnesium thin plate and said separator, if said magnesium fuel element is arranged contacting said cathode and said anode.

Magnesium air battery according to a third aspect of the present invention comprising:
magnesium fuel element according to a first aspect of the present invention,
formed from materials with conductivity, a cathode with conductivity that supplies electrons to oxygen, and an anode formed from materials with conductivity,
and an insulating sheet that isolates said magnesium fuel element and said cathode,
arranged to stack said cathode, said insulating sheet, said magnesium fuel element and said anode, said electrolyte flows out from said electrolyte bag with it being compressed, and wets said magnesium thin plate and said separator, if said insulating sheet is pulled out with said cathode and said magnesium fuel element being in contact.

Magnesium air battery according to a fourth aspect of the present invention comprising:
magnesium fuel element according to a first aspect of the present invention,
formed from materials with conductivity, a cathode with conductivity that supplies electrons to oxygen, and an anode formed from materials with conductivity,
a support portion, wherein said cathode is installed,
connecting lid portion, which is foldable with said support portion, wherein said anode is installed,
said magnesium fuel element is arranged to contact said support portion, wherein said cathode is installed, said electrolyte flows out from said electrolyte bag with it being compressed, and wets said magnesium thin plate and said separator, if said lid portion is folded along said magnesium fuel element and said anode being in contact.

Magnesium air battery according to a fifth aspect of the present invention comprising:
magnesium fuel element according to a first aspect of the present invention,
formed from materials with conductivity, a cathode with conductivity that supplies electrons to oxygen, and an anode formed from materials with conductivity,
a frame, retaining overlapped said magnesium fuel element, said cathode, and said anode,
said electrolyte flows out from said electrolyte bag with it being compressed, and wets said magnesium thin plate and said separator, if said magnesium fuel element, said cathode, and said anode being overlapped is inserted in said frame.

Said cathode may be formed from at least one of carbon, metal or manganese oxide.

Said cathode may also comprise a connector electrically connected to electronics.

Electronics according to a sixth aspect of the present invention, comprising:
a magnesium air battery according to second to fifth aspects of the present invention.

### Advantageous Effects of Invention

According to the present invention, an easy-to-handle magnesium fuel element, magnesium air battery comprising the magnesium fuel element, electronics comprising the magnesium air battery may be provided.

### Brief Description of Drawings

FIG. 1 is a schematic construction of magnesium fuel element, according to the first embodiment, (a) showing a plan view, (b) showing a side view;
FIG. 2 is a side view showing a schematic construction of a cellular phone, according to the second embodiment;
FIG. 3 is a cross-sectional view showing a schematic construction of magnesium fuel element and cellular phone, according to the second embodiment;
FIG. 4 is a perspective view showing a schematic construction of magnesium air battery, according to the third embodiment;
FIG. 5 is a perspective view showing a schematic construction of magnesium air battery, according to the fourth embodiment, (a) in a state of being opened, (b) in a state of being closed;
FIG. 6 is a schematic construction of magnesium air battery, according to the fifth embodiment, (a) showing a top view, (b) showing a front view;
FIG. 7 is a cross-sectional view showing a schematic construction of magnesium fuel element, according to the sixth embodiment;
FIG. 8 is a plan view showing a schematic construction of magnesium fuel element, according to the seventh embodiment.

### Description of Embodiments

Hereinafter, embodiments of the present invention, regarding magnesium fuel element, magnesium air battery, and electronics will be described with reference to the drawings.

### (First Embodiment)

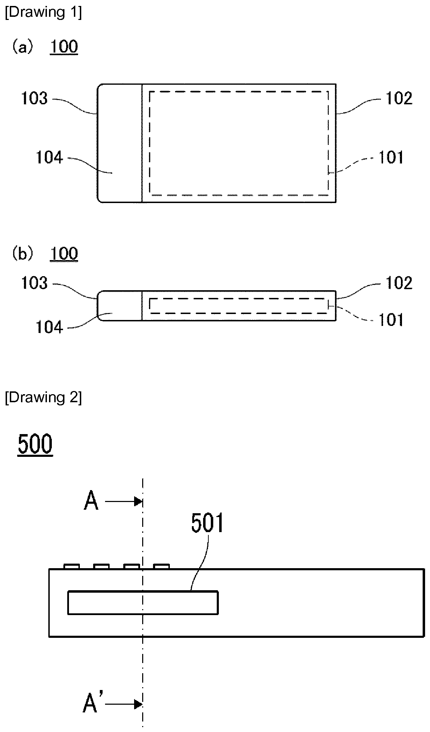

First, the construction of magnesium fuel element 100 will be described. FIG. 1 is a schematic construction of the magnesium fuel element 100, (a) showing a plan view, (b) showing a side view. The magnesium fuel element 100 comprises the magnesium thin plates 101, the separator 102, the electrolyte bag 103, and the electrolyte 104, as shown in FIG. 1(a) and 1(b). The magnesium fuel element 100 functions as a fuel of the magnesium air battery.

The magnesium thin plate 101 is a thin metal magnesium plate. The size of magnesium thin plate 101 is typically approximately 0.5mm thick and its surface area is 18cm², and is capable to be arranged inside common cellular phones and smart phones. The magnesium thin plate 101 is covered with the separator 102.

A zinc thin film is formed on the surface of the magnesium thin plate 101. A tunic of magnesium oxide insulator will be formed in air on the surface of the magnesium thin plate 101, and may block oxidation-reduction reactions, if there are no thin films. Internal magnesium reaction will not be blocked, even if a tunic of zinc oxide is formed, if a zinc thin film is formed on the surface, with zinc oxide being an insulator.

The separator 102 functions as a separator of magnesium air battery. The separator 102 includes a transparent film, which transmits the ions necessary for an oxidation-reduction reaction, a transparent film is formed from nonwoven fabrics, ion exchange resin, as an example. In addition, the portion of separator 102 is formed from materials with conductivity, being formed from a conducting film, as an example. The separator 102 remains products, such as magnesium hydroxide and magnesium oxide, inside and is formed not to leak such, with the progress of an oxidation-reduction reaction, even if currents are taken out from magnesium air battery, and generates said products.

The electrolyte bag 103 is a bag, wherein the electrolyte 104 is enclosed, connected to the separator 102. The connected portion of the electrolyte bag 103 and the separator 102 is formed to be easily burst, such as being thin than other portions or having a slit to the extent of not leaking the electrolyte 104. The electrolyte bag 103 is formed to enable wetting the magnesium thin plate 101 and the separator 102, via bursting easily burst portion with it being compressed, and flowing out the enclosed electrolyte 104.

The electrolyte 104 is an electrolyte that enables ion exchanges between the magnesium fuel element 100 and the cathode. In addition, water contained in the electrolyte 104 is used as a reaction in which oxygen is reduced at the cathode of magnesium air battery. The electrolyte 104 is an aqueous sodium chloride solution or a gel as an example, but is not limited thereto.

The magnesium fuel element 100 comprises of consumables, the magnesium thin plate 101 and the electrolyte 104, wrapping the separator 102 and the electrolyte bag 103. Thus, handling of said element on using as a fuel of air battery is user-friendly, and is easy to handle on distribution and selling. The magnesium thin plate 101 is covered with the separator 102, as an example, it will not generate magnesium power by being scratched on using or storing it, which is easy and safe to handle. In addition, since the electrolyte 104 is enclosed in the electrolyte bag 103, there are no needs to pour liquids directly into the magnesium air battery.

In addition, since the magnesium fuel element 100 is comprised as mentioned above, products generated by an oxidation-reduction reaction will remain inside the separator 102, which is easy to replace or collect, after being consumed. The reactions of products after being collected may be used as a material on producing the magnesium fuel element 100 by reducing collected products after reaction, which enables efficient use of resources.

Thus, the magnesium fuel element 100 enables easy handling on using magnesium air battery as a power supply for electronics, as an example.

### (Second Embodiment)

Then, the magnesium air battery, using the magnesium fuel element 100 as a fuel will be described.

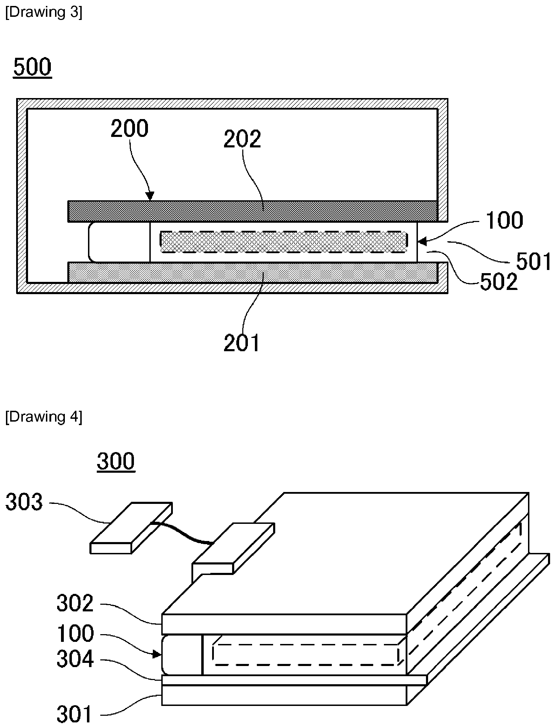

FIG. 2 is a side view showing a schematic construction of the cellular phone 500, and FIG. 3 is an A-A ' arrow sectional view of FIG. 2 showing a schematic construction of the cellular phone 500 and the magnesium air battery 200. Note that the substrate and other portions comprised inside the cellular phone 500 is omitted in FIG. 3. The magnesium air battery 200 is installed inside the cellular phone 500, as shown in FIG. 3. The magnesium air battery 200 comprises the magnesium fuel element 100, the cathode 201, and the anode 202.

The cathode 201 is formed from materials with conductivity, and provides electrons to the oxygen in the air, which is a cathode active material of the magnesium air battery 200. The cathode 201 contacts the portion of the separator 102, where ion transmits. The cathode 201 shall have large surface area and to adsorb oxygen easily, in order to promote the reaction for reducing oxygen. Materials for forming cathode 201 include carbon, metals, manganese compounds, and those combining thereto, as an example but is not limited to thereto. Regarding carbon, these forms may include activated carbon, carbon powder, carbon fibers, carbon nanotubes, and carbon felt.

The anode 202 is formed from materials with conductivity, and is electrically connected to the magnesium fuel element 100 by contacting a portion having the conductivity of the separator 102.

The side surface of the separator 102, contacting the cathode 201 of the magnesium fuel element 100 is formed from materials, which transmit ions, the side surface of the separator 102, contacting the anode 202 is formed from materials with conductivity.

The cathode 201 and the anode 202 are electrically connected to the substrate and other portions, comprised inside the cellular phone 500, and provides currents taken out from the magnesium air battery 200 to the substrate and other portions.

The inlet 501 is formed on one side of the cellular phone 500, as shown in FIG. 2, and the inlet 501 is connected to the void 502 inside the cellular phone 500, shown in FIG. 3. The magnesium 100 is inserted in the magnesium air battery, inside the cellular phone 500 via the inlet 501, and functions as a fuel for the magnesium air battery 200. The void 502 is comprised to compress the electrolyte bag 103, inserted in the magnesium fuel element 100, flowing out the electrolyte 104. In addition, the magnesium fuel element 100, being exhausted with generating electromotive force will be taken out and be replaced via the inlet 501.

Then, the method on how the magnesium air battery 200 generates electromotive force, using the magnesium fuel element 100 as a fuel will be described.

The electrolyte bag 103 will burst, being compressed, and the electrolyte 104 flowed out from the inlet 501, inside the cellular phone 500, wets the magnesium thin plate 101 and the separator 102, if the magnesium fuel element 100 is inserted in the magnesium air battery, inside the cellular phone 500 via the inlet 501. In addition to that, when the magnesium fuel element 100 contacts the cathode 201 and the anode 202 of the magnesium air battery 200, an oxidation-reduction reaction will start, generating electromotive force.

The electrolyte 104, wetting the magnesium thin plate 101 and the separator 102, will be reduced along with the progress of the reaction. The separator 102 lifts the electrolyte 104, remaining in the electrolyte bag 103, via phenomenon, such as capillary action, and replenish the electrolyte 104, necessary for the reaction, continuing the reaction, if the electrolyte 104 is reduced.

Thus, the cellular phone 500 is enabled to operate with magnesium being the fuel, with element 100 being inserted into the magnesium air battery 200, comprised inside the cellular phone 500.

The cellular phone 500 is capable to operate continuously by taking out the exhausted magnesium fuel element 100, which reaction is completed and does not generate electromotive force (when the battery runs down), and by inserting another magnesium fuel element 100. In addition, if the magnesium fuel element 100 taken out from thereof is collected, it is capable of being reused as a material for producing a new magnesium fuel element 100.

Users may generate electromotive force with just inserting the magnesium fuel element 100, since the magnesium air battery 200 being comprised inside the cellular phone 500, may be used as a power source, and is easy to handle.

### (Third Embodiment)

Then, the other magnesium air battery, using the magnesium fuel element 100 as a fuel will be described.

FIG. 4 is a perspective view showing a schematic construction of the magnesium air battery 300. The magnesium air battery 300 comprises the magnesium fuel element 100, the cathode 301, the anode 302, the connector 303, and the insulating sheet 304, as shown in FIG. 4.

The same applies to the construction of the cathode 301 and the anode 302 respectively, as the cathode 201 and the anode 202 of the second embodiment.

The cathode 301, the insulating sheet 304, the magnesium fuel element 100, and the anode 302 are arranged to be stacked. The side surface of the separator 102, contacting the cathode 301 of the magnesium fuel element 100 is formed from materials, which transmit ions, the side surface of the separator 102, contacting the anode 302 is formed from materials with conductivity.

The connector 303 is a connector electrically connected to the cellular phone 600. The connector 303 is comprised to be connectable with the cellular phone 600. The secondary battery, which is built in the cellular phone 600, will be charged by actually being connected and by generating electromotive force.

The insulating sheet 304 is a film, which isolates the magnesium fuel element 100 and the cathode 301. The insulating sheet 304 is formed from plastic films and paper, as an example. The insulating sheet 304 isolates the magnesium fuel element 100 and the cathode 301, avoiding oxidation-reduction reactions from occurring. The insulating sheet 304 is connected to the electrolyte bag 103 of the magnesium fuel element 100, being comprised to compress the electrolyte bag 103, flowing out the enclosed electrolyte 104, if the insulating sheet 304 is pulled.

Then, the method on how the magnesium air battery 300 generates electromotive force, and charges the cellular phone 600, using the magnesium fuel element 100 as a fuel will be described.

First, connect the connector 303 to the connector of the cellular phone 600.

Next, pull out the insulating sheet 304. The magnesium fuel element 100 contacts the cathode 301 with this, along with the electrolyte bag 103 being burst, flows out the electrolyte 104, generating an oxidation-reduction reaction, and the magnesium air battery 300 generates electromotive force.

Then, the power is supplied to the cellular phone 600 via the connector 303, and charges the cellular phone 600.

In this manner, the cellular phone 600 is chargeable with magnesium being a fuel, by connecting the connector 303 to the cellular phone 600, and pulling out the insulating sheet 304.

The cathode 301, the anode 302, and the connector 303 are reusable, if the exhausted magnesium air battery 300 is collected, and the magnesium fuel element 100 is capable of being reused as a material for producing a new magnesium fuel element 100.

The magnesium air battery 300 is easy to use, carry, and collect as a battery to charge the cellular phone 600, since it comprises the magnesium fuel element 100, electors, including the cathode 301, and the anode 302, and the connector 303. In addition, since an oxidation-reduction reaction occurs, and generates electromotive force by pulling out the insulating sheet 304, it is capable of being used with a simple operation, and is also easy to store when not being in use.

### (Fourth Embodiment)

Then, the other magnesium air battery, using the magnesium fuel element 100 as a fuel will be described.

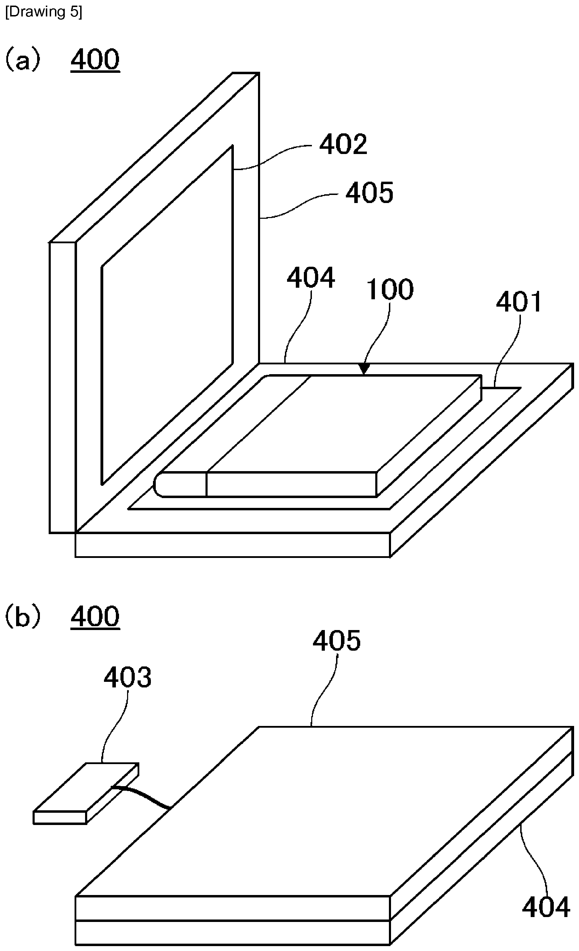

FIG. 5 is a perspective view showing a schematic construction of the magnesium air battery 400, (a) in a state of being opened, (b) in a state of being closed. The magnesium air battery 400 comprises the magnesium fuel element 100, the cathode 401, the anode 402, the connector 403, the support portion 404, and the lid portion 405, as shown in FIG. 5(a) and 5(b).

The same applies to the construction of the cathode 401 and the anode 402 respectively, as the cathode 201 and the anode 202 of the second embodiment. In addition, the same applies to the construction of the connector 403, as the connector 303 of the third embodiment.

The side surface of the separator 102, contacting the cathode 401 of the magnesium fuel element 100 is formed from materials, which transmit ions, the side surface of the separator 102, contacting the anode 402 is formed from materials with conductivity.

The support portion 404, attached with the cathode 401 is a casing that supports the magnesium fuel element 100, arranged to contact the cathode 401. Regarding the support portion 404, at least the portion the cathode 401 and the magnesium fuel element 100 is in contact is formed from materials with insulation such as resin, as an example.

The lid portion 405 is a casing installed with the anode 402, connected to the support portion 404, being foldable. The materials which form the support portion 404 are to be selected from the similar materials that form the lid portion 405.

The support portion 404 and the lid portion 405 arrange the magnesium fuel element 100 on the cathode 401, being installed on the support portion 404, and the magnesium fuel element is comprised to be fixed, if the lid portion 405 is folded (when the lid closes). In addition, it is being comprised to compress the electrolyte bag 103 of the magnesium fuel element 100, flowing out the enclosed electrolyte 104 via the support portion 404 and the lid portion 405, if the lid is closed.

Then, the method on how the magnesium air battery 400 generates electromotive force, and charges the cellular phone 600, using the magnesium fuel element 100 as a fuel will be described.

First, connect the connector 403 to the connector of the cellular phone 600.

Next, arrange the magnesium fuel element 100 on the cathode 401, installed on the support portion 404, and close the lid portion 405. The magnesium fuel element 100 contacts the cathode 401 and the anode 402 with this, along with the electrolyte bag 103 being burst, flows out the electrolyte 104, generating an oxidation-reduction reaction, and the magnesium air battery 400 generates electromotive force.

Then, the power is supplied to the cellular phone 600 via the connector 403, and charges the cellular phone 600.

In this manner, the cellular phone 600 is chargeable with magnesium being a fuel, by connecting the connector 403 to the cellular phone 600, and putting the magnesium fuel element 100 between the support portion 404 and the lid portion 405.

The cellular phone 600 is capable of being charged continuously by opening the lid portion 405 (opening the lid), taking out the exhausted magnesium fuel element 100, which reaction is completed and does not generate electromotive force, and by arranging another magnesium fuel element 100, then to close the lid. In addition, if the magnesium fuel element 100, taken out from thereof is collected, it is capable of being reused as a material for producing a new magnesium fuel element 100.

The magnesium air battery 400 is easy to use, carry, and collect as a battery to charge the cellular phone 600, since it comprises the magnesium fuel element 100, electors, including the cathode 401, and the anode 402, the connector 403, and the casing, including the support portion 404 and the lid portion 405. In addition, since an oxidation-reduction reaction occurs, and generates electromotive force by putting the magnesium fuel element 100 between the support portion 404 and the lid portion 405, it is capable of being used with a simple operation, and is also easy to store when not being in use.

### (Fifth Embodiment)

Then, the other magnesium air battery, using the magnesium fuel element 100 as a fuel will be described.

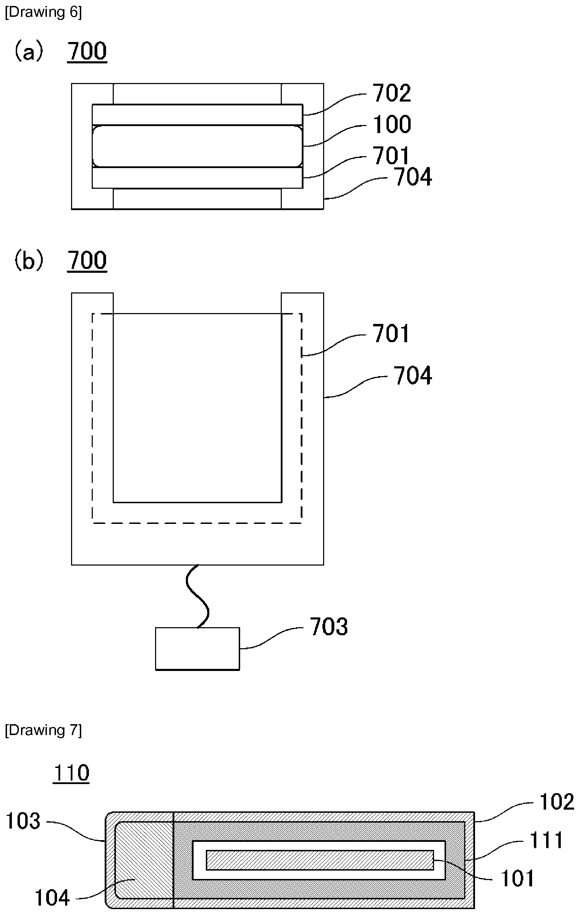

FIG. 6 is a schematic construction of the magnesium air battery 700, (a) showing a top view, (b) showing a front view. The magnesium air battery 700 comprises the magnesium fuel element 100, the cathode 701, the anode 702, the connector 703, and the frame 704, as shown in FIG. 6(a) and 6(b).

The same applies to the construction of the cathode 701 and the anode 702 respectively, as the cathode 201 and the anode 202 of the second embodiment. In addition, the same applies to the construction of the connector 703, as the connector 303 of the third embodiment.

The side surface of the separator 102, contacting the cathode 401 of the magnesium fuel element 100 is formed from materials, which transmit ions, the side surface of the separator 102, contacting the anode 402 is formed from materials with conductivity.

The frame 704 is a frame retaining the magnesium fuel element 100, the cathode 701, and the anode 702. The external of the frame 704 is formed in a u-shape, having an opening in the open portion. The frame 704 is formed from materials with insulation such as resin, as an example.

The cathode 701, the magnesium fuel element 100, and the anode 702 are inserted so as to overlap the frame 704. In addition, the portion, where the electrolyte bag 103 of the magnesium fuel element is located in the frame 704, is comprised in a volume so that the electrolyte bag 103 bursts, being compressed, and flows out the enclosed electrolyte 104, if the cathode 701, the magnesium fuel element 100, and the anode 702 are inserted.

The thickness and width of the opening of the frame 704 match those of the cathode 701, the magnesium fuel element 100, and the anode 702 being overlapped. In this manner, by forming the frame 704, leakage of the electrolyte 104 from the opening is preventable.

Then, the method on how the magnesium air battery 700 generates electromotive force, and charges the cellular phone 600, using the magnesium fuel element 100 as a fuel will be described.

First, connect the connector 703 to the connector of the cellular phone 600.

Next, put the magnesium fuel element 100 between the cathode 701 and the anode 702, then insert the frame 704. The magnesium fuel element 100 contacts the cathode 701 and the anode 702 with this, along with the electrolyte bag 103 being burst, flows out the electrolyte 104, generating an oxidation-reduction reaction, and the magnesium air battery 700 generates electromotive force.

Then, the power is supplied to the cellular phone 600 via the connector 703, and charges the cellular phone 600.

In this manner, the cellular phone 600 is chargeable with magnesium being a fuel, by putting the magnesium fuel element 100 between the cathode 701 and the anode 702, and inserting the frame 704.

The cellular phone 600 is capable of being charged continuously by pulling out the exhausted magnesium fuel element 100, which reaction is completed and does not generate electromotive force, and replacing it by inserting a new magnesium fuel element 100. In addition, if the magnesium fuel element 100, taken out from thereof is collected, it is capable of being reused as a material for producing a new magnesium fuel element 100.

The magnesium air battery 700 is easy to use, carry, and collect as a battery to charge the cellular phone 600, since it comprises the magnesium fuel element 100, electors, including the cathode 701, and the anode 702, the connector 703, and the frame 704. In addition, since an oxidation-reduction reaction occurs, and generates electromotive force by putting the magnesium fuel element 100 between the cathode 701 and the anode 702, it is capable of being used with a simple operation, and is also easy to store when not being in use.

### (Sixth Embodiment)

Then, the other magnesium fuel elements, including magnesium, will be described. The same configuration of the magnesium fuel element for the first embodiment is denoted by the same reference numerals.

FIG. 7 is a cross-sectional view of the magnesium fuel element 110. The magnesium fuel element 110 comprises the magnesium thin plate 101, the separator 102, the electrolyte bag 103, the electrolyte 104, and the water retention agent 111, as shown in FIG. 7. The same configuration of the magnesium fuel element 100 for the first embodiment was denoted by the same reference numerals.

The water retention agent 111 is a water retention agent, which absorbs and retains the electrolyte 104. The water retention agent 111 is capable of absorbing water, being formed from materials which shapes are easily deformed, such as gel, as an example. The water retention agent 111 is coated inside the separator 102.

Regarding the magnesium air battery 110, the magnesium thin plate 101 exhausts and adheres products, including magnesium hydroxide and magnesium oxide, on the surface of the magnesium thin plate 101, if the oxidation-reduction reaction progresses. The products cause gaps between the magnesium thin plate 101 and the separator 102 in this case, and the following reactions may be blocked.

Having the water retention agent 111 being coated inside the separator 102, the oxidation-reduction reaction will not be blocked, since the water retention agent 111 fills the gaps between the magnesium thin plate 101 and the separator 102, even though the oxidation-reduction reaction progresses, and adheres reaction products on the surface of the magnesium thin plate 101.

As described above, the magnesium air battery 110 is capable of generating electromotive force continuously in an efficient manner, by comprising the water retention agent 111.

### (Seventh Embodiment)

Then, the other magnesium fuel elements, including magnesium, will be described. The same configuration of the magnesium fuel element for the first embodiment is denoted by the same reference numerals.

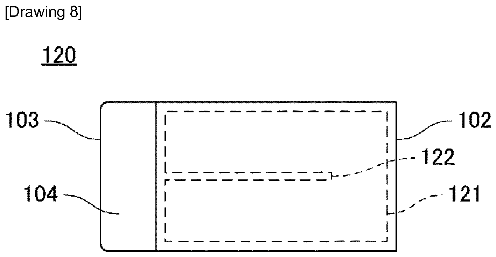

FIG. 8 is a plan view of the magnesium fuel element 120. The magnesium fuel element 120 comprises the magnesium thin plate 121, the separator 102, the electrolyte bag 103, and the electrolyte 104, as shown in FIG. 8. The same configuration of the magnesium fuel element 100 for the first embodiment was denoted by the same reference numerals.

The magnesium thin plate 121 is a thin metal magnesium plate. The size and the material of the magnesium thin plate 121 are similar to those of the magnesium thin plate 101. The magnesium thin plate 121 is formed from the slit 122.

The hydrogen generated with the oxidation-reduction reaction escape from the slit 122, by forming the slit 122, being free from covering the surface of the magnesium thin plate 121. Thereby the hydrogen is less likely to block the reaction, covering the surface of the magnesium thin plate. In addition, there will be more edge portions by forming the slit 122, where more reactions occur thereof.

As described above, the reaction will occur smoothly by using the magnesium thin plate 121, compared to that of using the magnesium thin plate 101 without a slit, and energy efficiency improves. The present applicant has confirmed that the energy efficiency of the magnesium air battery has improved by 10 to 20 % by using the magnesium thin plate with a slit.

Having thus described on embodiments of the present invention, the present invention is not limited to the above embodiments.

The magnesium thin plate 101 was described to be formed from metallic magnesium, but not limited thereto. Any magnesium fuel element 101 intended to elute magnesium ions are accepted, and may be formed from alloy containing magnesium or magnesium compound, as an example.

In addition, a zinc thin film was described to be formed on the surface of the magnesium thin plate 101, but is not limited thereto. Other thin films are accepted on the surface of the magnesium thin plate 101, as an example, and magnesium thin plates not forming other thin films on their surface are also accepted.

In addition, the electrolyte bag 103 was described to flow out the enclosed electrolyte 104, with itself being burst, but is not limited thereto. The electrolyte bag 103 may comprise a stopper that closes the opening of the electrolyte bag 103 and its opening, opening its opening and flowing out the electrolyte 104 from its opening from being compressed, as an example. In addition, the electrolyte bag 103 may comprise an opening with a valve, and the electrolyte 104 may flow out via passing through the valve of the opening, from being compressed.

In addition, the electrolyte bag 103 was described as a bag enclosed with the electrolyte 104 inside, but is not limited thereto. The inside of the electrolyte bag 103 may be a capsule or a microcapsule enclosed with the electrolyte 104 inside, as an example.

In addition, the electrolyte bag 103 was described to be located on the side surface of the magnesium thin plate 101, but is not limited thereto. The electrolyte bag 103 may be located on the surface (back) of the magnesium thin plate 101, contacting the cathode 201, 301, 401 and 701 or the anode 202, 302, 402 and 702. The electrolyte bag 103 may be formed from materials similar to those of the separator 102 or the electrolyte bag 103 will be comprised, being located inside the separator 102 in this case.

In addition, the cathode 201 and the anode 202 were described in the second embodiment to be electrically connected to the substrate and other portions, comprised inside the cellular phone 500, and provides currents taken out from the magnesium air battery 200 to the substrate and other portions, but is not limited thereto. The cathode 201 and the anode 202 may be connected to the secondary battery or other batteries, which the cellular phone 500 comprises, and may charge such secondary battery.

The magnesium air battery 300 was described in the third embodiment to comprise one each of the magnesium fuel element 100, the cathode 301, and the anode 302, but is not limited thereto. The magnesium air battery 300 may comprise a plurality of magnesium fuel element 100, cathode 301, and anode 302, and these may be connected in series or in parallel, as an example. The insulating sheet 304 is recommended to be put between each cathode and the magnesium fuel element in this case.

In addition, the magnesium air battery 300 was described in the third embodiment to be collected, but is not limited thereto. The magnesium air battery 300 may be comprised, enabling the users to take out the magnesium fuel element 100 from thereof, and the magnesium fuel element 100 may be collected.

The magnesium air batteries 200, 300 and 400 were described in the second to fifth embodiments to comprise one each of the cathodes 201, 301 and 401 along with one each of the anodes 202, 302 and 402, but is not limited thereto. These magnesium air batteries may be formed, comprising two cathodes 201, 301 and 401, with the magnesium fuel element 100 being put in-between. The anode 202, 302 and 402 will be installed, not to create a short circuit with the cathode 201, 301 and 401 in this case. The oxidation-reduction reaction progresses at both sides of the magnesium fuel element 100, if being formed as such, and will enhance the reaction efficiency.

Moreover, the magnesium air batteries may comprise n magnesium fuel elements 100, cathode 201, 301, 401 and 701 along with anode 202, 302, 402 and 702, which may be connected in series or in parallel. The voltage will be n times without changing the area and the thickness, if the area is 1/n and n magnesium fuel elements are connected in series in this case. This method is more efficient than that of raising voltage, using the booster circuit.

The magnesium air battery 200 in the second embodiment was described to be placed inside the cellular phone 500, and the magnesium air batteries 300, 400 and 700 in the third to fifth embodiments were described to comprise the connectors 303, 403 and 703, being connected to the cellular phone 600, but is not limited thereto. The magnesium air battery 200 may comprise a connector to be connected to the cellular phone 500, and the magnesium air batteries 300, 400 and 700 may be placed inside the cellular phone 600, as an example.

In addition, the magnesium air batteries in the second to fifth embodiments were described to use the magnesium fuel element 100 as a fuel, but is not limited thereto. The magnesium air battery 110 in the sixth embodiment or the magnesium air battery 120 in the seventh embodiment may be used as a fuel, as an example. Moreover, a magnesium air battery comprising the water retention agent 111 and the magnesium thin plate 121, combining the magnesium air battery 110 and the magnesium air battery 120 may be used as a fuel, as an example.

The target of the magnesium air battery being a power supply was described to be cellular phones, but is not limited thereto. The magnesium air battery may target any electronics, such as smart phones, PDAs, electronic dictionaries, portable game players, digital cameras, portable music players, laptops and wearables. The thickness of each element, including the magnesium thin plate 101 and the cathode 201, is able to be formed in 0.5mm or less, and the thickness of the magnesium air battery may be formed at the degree of 1 mm. The present applicant has obtained a current concentration of 0.2 to 0.5 A/cm² by the experiment, and the magnesium air battery in the embodiments are especially suitable for wearables, which strongly desire the coexistence of large output with thinness. Moreover, the magnesium air battery may target large equipment, such as electronic cars, which are driven by electricity.

Note that the present invention without departing from the broader spirit and the scope of the present invention are those enabling the various embodiments and variations. In addition, the above-described embodiments are intended to illustrate the invention and are not intended to limit the scope of the invention. In other words, the scope of the invention, is indicated by the appended claims, not the embodiments. In addition, the various modifications to be applied within the range and the meaning of the equivalents of the invention and its claims are considered within the scope of this invention.

This application is based on the Japanese Patent Application No. 2014-106567, filed on May 22, 2014. The application shall incorporate the Description of the Japanese Patent Application No. 2014-106567, Claims, and the entire Drawings as a reference herein.

### Explanation of References

100, 110, 120
   Magnesium Fuel Element
101, 121
   Magnesium Thin Plate
102
   Separator
103
   Electrolyte Bag
104
   Electrolyte
111
   Water Retention Agent
122
   Slit
200,300,400,700
   Magnesium Air Battery
201,301,401,701
   Cathode
202,302,402,702
   Anode
303,403,703
   Connector
304
   Insulating Sheet
404
   Supporting Portion
405
   Lid Portion
500,600
   Cellular Phone
501
   Inlet
502
   Void
704
   Frame

## Claims

1. A magnesium fuel element comprising:
a magnesium thin plate containing magnesium,
separator covering said magnesium thin plate, including transparent film which transmits ions,
electrolyte bag connected to said separator,
electrolyte enclosed in said electrolyte bag,
said electrolyte, flowed out from said electrolyte bag, is capable of wetting said magnesium thin plate and said separator.

2. A magnesium fuel element stated in Claim 1 comprising:
said separator including a conductive film.

3. A magnesium fuel element stated in Claim 1 or 2 comprising:
a zinc thin film on the surface of said magnesium thin plate.

4. A magnesium fuel element stated in either Claim 1 to Claim 3 comprising:
a water retention agent, being arranged contacting said magnesium thin plate of the said separator, which absorbs and retains said electrolyte.

5. A magnesium fuel element stated in either Claim 1 to Claim 4 comprising:
a slit on said magnesium thin plate.

6. A magnesium air battery comprising:
a magnesium fuel element stated in either Claim 1 to Claim 5,
formed from materials with conductivity, a cathode with conductivity that supplies electrons to oxygen,
and an anode formed from materials with conductivity,
said electrolyte flows out from said electrolyte bag with it being compressed, and wets said magnesium thin plate and said separator, if said magnesium fuel element is arranged contacting said cathode and said anode.

7. A magnesium air battery comprising:
a magnesium fuel element stated in either Claim 1 to Claim 5,
formed from materials with conductivity, a cathode with conductivity that supplies electrons to oxygen,
and an anode formed from materials with conductivity,
and an insulating sheet that isolates said magnesium fuel element and said cathode,
arranged to stack said cathode, said insulating sheet, said magnesium fuel element and said anode,
said electrolyte flows out from said electrolyte bag with it being compressed, and wets said magnesium thin plate and said separator, if said insulating sheet is pulled out with said cathode and said magnesium fuel element being in contact.

8. A magnesium air battery comprising:
a magnesium fuel element stated in either Claim 1 to Claim 5,
formed from materials with conductivity, a cathode with conductivity that supplies electrons to oxygen,
and an anode formed from materials with conductivity,
a support portion, wherein said cathode is installed,
connecting lid portion, which is foldable with said support portion, wherein said anode is installed,
said magnesium fuel element is arranged to contact said support portion, wherein said cathode is installed, said electrolyte flows out from said electrolyte bag with it being compressed, and wets said magnesium thin plate and said separator, if said lid portion is folded along said magnesium fuel element and said anode being in contact.

9. A magnesium air battery comprising:
a magnesium fuel element stated in either Claim 1 to Claim 5,
formed from materials with conductivity, a cathode with conductivity that supplies electrons to oxygen,
and an anode formed from materials with conductivity,
a frame, retaining overlapped said magnesium fuel element, said cathode, and said anode,
said electrolyte flows out from said electrolyte bag with it being compressed, and wets said magnesium thin plate and said separator, if said magnesium fuel element, said cathode, and said anode being overlapped is inserted in said frame.

10. A magnesium air battery stated in either Claim 6 to Claim 9 comprising:
said cathode formed from at least one of carbon, metal or manganese oxide.

11. A magnesium air battery stated in either Claim 6 to Claim 9 comprising:
a connector electrically connected to electronics.

12. Electronics comprising:
a magnesium air battery stated in either Claim 6 to Claim 10.
